# EUROPÄISCHE PATENTSCHRIFT

(11) **EP 3 447 011 B1**
(45) Veröffentlichungstag und Bekanntmachung des Hinweises auf die Patenterteilung: **11.12.2024**
(21) Anmeldenummer: 18189092.2
(22) Anmeldetag: 15.08.2018
(51) Int. Cl.: B65G 53/12

(54) **BAUSTOFF-DRUCKLUFTFÖRDERER**
BUILDING MATERIAL COMPRESSED AIR CONVEYOR
CONVOYEUR PNEUMATIQUE DE MATÉRIAU DE CONSTRUCTION

(30) Priorität: 21.08.2017 DE 102017214562
(43) Veröffentlichungstag der Anmeldung: 27.02.2019
(73) Patentinhaber: Putzmeister Mörtelmaschinen GmbH, 72631 Aichtal (DE)
(72) Erfinder: Hörz, Matthias, 70736 Fellbach-Schmiden (DE)
(74) Vertreter: Patentanwälte Ruff, Wilhelm, Beier, Dauster & Partner mbB

(56) Entgegenhaltungen:
- EP-A1- 0 867 389
- WO-A1-2016/034644
- DE-A1- 2 936 324
- DE-A1- 3 820 710

## Beschreibung

### ANWENDUNGSGEBIET UND STAND DER TECHNIK

Die Erfindung bezieht sich auf einen Baustoff-Druckluftförderer.

Die DE 38 20 710 A1 offenbart ein Verfahren und eine Vorrichtung zum Leerblasen von aus mindestens einem Druckbehälter mit einem Fördermedium parallel beaufschlagten, jeweils mit mindestens einer Guteinspeisevorrichtung in Gestalt einer Zellenradschleuse versehenen Förderleitung eines pneumatischen langsamen Fördersystems. Pneumatische Förderleitungen müssen nach beendeter Förderung bisweilen von sämtlichen Gutresten befreit werden. Die Notwendigkeit hierzu ergibt sich beispielsweise vor einem beabsichtigten Wechsel des Fördergutes, da man am Zielort in der Regel reines, das heißt nicht mit Resten des zuvor geförderten Materials versetztes Gut wünscht. Auch bei Betriebsunterbrechungen wird eine solche Abreinigung vielfach gefordert, so z.B. insbesondere in der Lebensmittelindustrie nach der Förderung leicht verderblicher Kontakte.

Die WO 2016/034644 A1 offenbart einen Baustoff-Druckluftförderer nach dem Oberbegriff des Anspruchs 1.

### AUFGABE UND LÖSUNG

Der Erfindung liegt als Aufgabe die Bereitstellung eines Baustoff-Druckluftförderers zugrunde, welcher schnell Baustoff fördert und/oder einen niedrigen Energieverbrauch hat.

Die Erfindung löst diese Aufgabe durch die Bereitstellung eines Baustoff-Druckluftförderers mit den Merkmalen des Anspruchs 1. Vorteilhafte Weiterbildungen der Erfindung sind in den abhängigen Ansprüchen beschrieben.

Der erfindungsgemäße Baustoff-Druckluftförderer weist eine Baustoffeinheit zur Bereitstellung von Baustoff und eine Drucklufteinheit auf. Die Baustoffeinheit ist zur Bereitstellung von Dickstoff ausgebildet. Die Drucklufteinheit weist eine Luftkompressoreinheit, einen Luft-Druckspeicher, eine Speichereinleitung, eine Speicherausleitung und eine Umgehungsleitung auf. Die Luftkompressoreinheit ist zur Erzeugung von Druckluft ausgebildet. Der Luft-Druckspeicher ist zur Speicherung von Druckluft ausgebildet. Die Speichereinleitung ist für einen Fluss von Druckluft von der Luftkompressoreinheit in den Luft-Druckspeicher hinein ausgebildet Die Speicherausleitung ist für einen Fluss von Druckluft aus dem Luft-Druckspeicher heraus in die Baustoffeinheit hinein zur Förderung eines Flusses von Baustoff aus der Baustoffeinheit mittels Druckluft heraus ausgebildet. Die Umgehungsleitung ist für einen Fluss von Druckluft von der Luftkompressoreinheit um den Luft-Druckspeicher herum in die Baustoffeinheit hinein zur Förderung eines Flusses von Baustoff aus der Baustoffeinheit mittels Druckluft heraus ausgebildet.

Die Umgehungsleitung ermöglicht es bei befülltem Luft-Druckspeicher und einer Förderung eines Flusses von Baustoff aus der Baustoffeinheit mittels Druckluft heraus Druckluft am Luft-Druckspeicher vorbei beziehungsweise ohne über den Luft-Druckspeicher, insbesondere direkt, in die Baustoffeinheit einzuleiten.

Aufgrund eines typischerweise relativ geringeren Drucks in der Baustoffeinheit gegenüber einem Druck in dem, insbesondere befüllten, Luft-Druckspeicher kann die Drucklufteinheit, insbesondere ihre Luftkompressoreinheit, bei gleicher Leistungsaufnahme deutlich mehr Luftvolumen für die Förderung zur Verfügung stellen oder bei gleichem Luftvolumen Energie sparen. Dies kann insbesondere gegenüber einem Baustoff-Druckluftförderer ohne die Umgehungsleitung gelten, bei welchem Druckluft von der Luftkompressoreinheit ausschließlich über den Luft-Druckspeicher in die Baustoffeinheit hinein fließen kann.

Im Detail kann die Luftkompressoreinheit aufgrund der technischen Gegebenheit, dass sich bei gleichbleibender abgegebener Luftmenge sich die Leistungsaufnahme gleich zum steigenden Druck erhöht, durch die Umgehungsleitung in einem relativ niedrigeren Druckbereich betrieben werden oder sein. Aufgrund der Senkung der Leistungsaufnahme können speziell bei leistungsschwachen Druckluftförderern größere Luftvolumenströme generiert werden. Dies kann zur Erhöhung der Performance des Baustoff-Druckluftförderers und/oder zur Senkung der Leistungsaufnahme des Baustoff-Druckluftförderers eingesetzt werden.

Folglich ermöglicht der Baustoff-Druckluftförderer eine schnelle Förderung von Baustoff und/oder einen niedrigen Energieverbrauch.

Die Baustoffeinheit ist zur Bereitstellung von Dickstoff ausgebildet, wie Mörtel, Zement, Estrich, Beton und/oder Putz. Zusätzlich kann die Baustoffeinheit zur Bereitstellung von Sand, Riesel und/oder Kies ausgebildet sein. Insbesondere kann die Baustoffeinheit einen Förderbehälter aufweisen, welcher zur Bereitstellung von Baustoff in einem förderfähigen Zustand ausgebildet sein kann. Zusätzlich kann der Förderbehälter als Mischbeschälter ausgebildet sein, welcher zum Mischen von Baustoff ausgebildet sein kann.

Die Luftkompressoreinheit kann nur einen einzigen oder gemeinsamen Kompressor für die Speichereinleitung und für die Umgehungsleitung aufweisen. Alternativ kann die Luftkompressoreinheit einen ersten Kompressor für die Speichereinleitung und einen zweiten, von dem ersten verschiedenen Kompressor für die Umgehungsleitung aufweisen. Die Luftkompressoreinheit kann als Luftverdichtereinheit bezeichnet werden.

Der Luft-Druckspeicher braucht nicht für Baustoff geeignet beziehungsweise ausgebildet zu sein, insbesondere nicht zur Bereitstellung von Baustoff. In anderen Worten kann der Luft-Druckspeicher derart ausgebildet sein, dass wenn Baustoff in ihn hinein gelangt, der Luft-Druckspeicher beschädigt werden oder bereits beschädigt sein kann. Nochmals anders formuliert kann der Luft-Druckspeicher nur für Druckluft geeignet beziehungsweise ausgebildet sein. Der Luft-Druckspeicher kann ein Speichervolumen von mindestens 100 Liter (I) aufweisen, insbesondere von mindestens 200 I, insbesondere von mindestens 300 I, insbesondere von mindestens 400 I, insbesondere von mindestens 600 I, und/oder von maximal 2000 I.

Die Speichereinleitung ist für einen Fluss von Druckluft von der Luftkompressoreinheit in den Luft-Druckspeicher ausgelegt. Die Speichereinleitung braucht nicht für Baustoff geeignet zu sein.

Die Speicherausleitung ist für einen Fluss von Druckluft aus dem Luft-Druckspeicher heraus in die Baustoffeinheit hinein ausgelegt.

Speicherausleitung braucht nicht für Baustoff geeignet zu sein.

Die Umgehungsleitung ist für einen Fluss von Druckluft von der Luftkompressoreinheit um den Luft-Druckspeicher herum in die Baustoffeinheit hinein ausgelegt. Die Umgehungsleitung kann als Bypassleitung bezeichnet werden. Die Umgehungsleitung braucht nicht für Baustoff geeignet zu sein.

Die Speichereinleitung, die Speicherausleitung und/oder die Umgehungsleitung können/kann jeweils für Druckluft mit einem Druck von maximal 30 bar ausgebildet oder ausgelegt sein.

Zur Förderung eines Flusses von Baustoff aus der Baustoffeinheit mittels Druckluft heraus kann die Druckluft auf den Baustoff einwirken, insbesondere direkten Kontakt mit dem Baustoff aufweisen, und/oder die Baustoffeinheit beziehungsweise ihr Förderbehälter, soweit vorhanden, kann dazu ausgebildet sein. Die Druckluft kann als Förderluft bezeichnet werden.

Die Drucklufteinheit braucht nicht für Baustoff geeignet zu sein.

Der Baustoff-Druckluftförderer weist eine Steuereinheit auf. Die Steuereinheit ist dazu ausgebildet, den Baustoff-Druckluftförderer, insbesondere automatisch, derart anzusteuern, dass vor einer Förderung eines Flusses von Baustoff aus der Baustoffeinheit mittels Druckluft heraus die Luftkompressoreinheit den Luft-Druckspeicher mit Druckluft befüllt. Des Weiteren ist die Steuereinheit dazu ausgebildet, den Baustoff-Druckluftförderer, insbesondere automatisch, derart anzusteuern, dass für die Förderung eines Flusses von Baustoff aus der Baustoffeinheit mittels Druckluft heraus mindestens zu Beginn Druckluft aus dem Luft-Druckspeicher heraus und Druckluft von der Luftkompressoreinheit durch die Umgehungsleitung hindurch, insbesondere gleichzeitig, in die Baustoffeinheit hinein fließt.

Bei einem Baustoff-Druckluftförderer ohne die Umgehungsleitung müsste beim Fließen von Druckluft aus dem Luft-Druckspeicher heraus zu Beginn der Förderung der Luft-Druckspeicher wieder mit Druckluft befüllt werden. Da insbesondere zu Beginn der Förderung typischerweise eine enorme Druckdifferenz zwischen dem Luft-Druckspeicher und der Baustoffeinheit bestehen kann, müsste die Luftkompressoreinheit gegen einen relativ hohen Druck arbeiten. Durch die Umgehungsleitung kann zu Beginn und somit über die gesamte Förderung die Leistungsaufnahme der Luftkompressoreinheit deutlich gesenkt werden oder sein. Durch die Leistungscharakteristik der Luftkompressoreinheit verbunden mit der entsprechenden Druckluftleitung beziehungsweise Druckluftführung kann durch die Umgehungsleitung der Leistungsverlauf der Luftkompressoreinheit ideal auf die Anforderungen beim Fördern angepasst werden. Zugleich ermöglicht der Luft-Druckspeicher zu Beginn der Förderung eine schnelle Förderung von Baustoff.

Insbesondere kann die Steuereinheit dazu ausgebildet sein, die Luftkompressoreinheit zur Erzeugung von Druckluft, insbesondere automatisch, anzusteuern.

Die Steuereinheit kann ein Computer, Mikrokontroller oder eine mechanische Schaltung sein.

Insbesondere kann die Förderung beziehungsweise ein Fördervorgang drei zeitliche Förderphasen aufweisen. Insbesondere kann die Förderung eine Zeitdauer von 120 Sekunden (s) bis 180 s aufweisen. In einer ersten Förderphase kann ein Druck beziehungsweise Druckwert beziehungsweise Druckpegel, insbesondere von Druckluft, in beziehungsweise innerhalb der Baustoffeinheit, insbesondere in dem Förderbehälter beziehungsweise innerhalb des Förderbehälters, soweit vorhanden, ansteigen beziehungsweise sich aufbauen. Insbesondere kann die erste Förderphase eine Zeitdauer von 30 s bis 40 s aufweisen. In einer, insbesondere von der ersten verschiedenen und/oder der ersten zeitlich nachfolgenden, zweiten Förderphase kann der Druck in der Baustoffeinheit, insbesondere mit Ausnahme geringfügiger Schwankungen, konstant sein. Insbesondere kann die zweite Förderphase eine Zeitdauer von 60 s bis 100 s aufweisen. In einer, insbesondere von der ersten und/oder zweiten verschiedenen und/oder der ersten und/oder der zweiten zeitlich nachfolgenden, dritten Förderphase kann der Druck in der Baustoffeinheit abfallen beziehungsweise abklingen beziehungsweise sich abbauen. Insbesondere kann die dritte Förderphase eine Zeitdauer von 30 s bis 40 s aufweisen.

Mindestens zu Beginn der Förderung kann bedeuten, dass mindestens in der ersten Förderphase mindestens zeitweise, insbesondere die ganze Zeit, Druckluft aus dem Luft-Druckspeicher heraus fließt und dass mindestens zeitweise, insbesondere die ganze Zeit, Druckluft von der Luftkompressoreinheit durch die Umgehungsleitung hindurch fließt. Insbesondere kann zeitweise mindestens 50 Prozent (%), insbesondere mindestens 65 %, insbesondere mindestens 80 %, insbesondere mindestens 95 %, der Zeitdauer der ersten Förderphase bedeuten.

In einer Weiterbildung der Erfindung ist der Luft-Druckspeicher zur Speicherung von Druckluft mit einem maximalen Betriebsdruck von mehr als 8 bar ausgebildet, insbesondere von minimal 10 bar, insbesondere von minimal 12 bar, insbesondere von minimal 14 bar, und/oder von maximal 30 bar. Bei Überschreiten des maximalen Betriebsdrucks braucht der Luft-Druckspeicher nicht beschädigt zu werden oder bereits beschädigt zu sein, da der Luft-Druckspeicher für einen gegenüber dem Betriebsdruck relativ höheren Prüfdruck ausgebildet sein kann. Typischerweise kann ein Prüfdruck einem 1.3-fachen des Betriebsdrucks entsprechen. Der Betriebsdruck des Luft-Druckspeichers kann als Speicherbetriebsdruck bezeichnet werden.

In einer Weiterbildung der Erfindung weist der Baustoff-Druckluftförderer einen Elektromotor zum Antrieb der Luftkompressoreinheit auf beziehungsweise ist zum Antrieb der Luftkompressoreinheit ausgebildet. Insbesondere kann der Baustoff-Druckluftförderer beziehungsweise sein Elektromotor zum Anschluss an einen Kraftstromanschluss mit 400 Volt (V) und einer maximalen Strombelastung begrenzt auf maximal 16 Ampere (A) oder 32 A oder 63 A ausgebildet sein. Die Umgehungleitung kann eine optimale Nutzung der zur Verfügung stehenden elektrischen Leistung ermöglichen. Die Steuereinheit, soweit vorhanden, kann dazu ausgebildet sein, den Elektromotor zum Antrieb der Luftkompressoreinheit, insbesondere automatisch, anzusteuern. Zusätzlich oder alternativ kann der Baustoff-Druckluftförderer einen Verbrennungsmotor, insbesondere einen Dieselmotor, zum Antrieb der Luftkompressoreinheit aufweisen.

In einer Weiterbildung der Erfindung weist die Drucklufteinheit einen Druckminderer auf. Der Druckminderer ist an der Speicherausleitung dazu angeordnet beziehungsweise ausgebildet, Druckluft aus dem Luft-Druckspeicher heraus in die Baustoffeinheit hinein auf einen maximalen Betriebsdruck von maximal 8 bar zu begrenzen, insbesondere von maximal 6 bar, insbesondere von maximal 4 bar, insbesondere von maximal 2 bar. Dies ermöglicht die Baustoffeinheit, welche typischerweise nicht für einen höheren Betriebsdruck ausgebildet zu sein braucht, vor Beschädigung durch einen höheren Druck zu schützen. Der Betriebsdruck der Baustoffeinheit kann als Baustoffeinheitsbetriebsdruck bezeichnet werden. Der Druckminderer braucht nicht für Baustoff geeignet zu sein.

In einer Weiterbildung der Erfindung weist die Drucklufteinheit ein Umgehungsfreigabe- und Absperrventil auf. Das Umgehungsfreigabe- und Absperrventil ist an der Umgehungsleitung dazu angeordnet beziehungsweise ausgebildet, einen Fluss von Druckluft von der Luftkompressoreinheit durch die Umgehungsleitung hindurch in die Baustoffeinheit hinein freizugeben oder abzusperren. Dies kann bei Absperrung ermöglichen, einen Fluss von Druckluft auf die Speichereinleitung und/oder die Speicherausleitung zu steuern oder zu beschränken. Die Steuereinheit, soweit vorhanden, kann dazu ausgebildet sein, das Umgehungsfreigabe- und Absperrventil zum Freigeben oder Absperren, insbesondere automatisch, anzusteuern. Das Umgehungsfreigabe- und Absperrventil braucht nicht für Baustoff geeignet zu sein.

In einer Weiterbildung der Erfindung weist die Drucklufteinheit ein Speicherfreigabe- und Absperrventil auf. Das Speicherfreigabe- und Absperrventil ist an der Speicherausleitung dazu angeordnet beziehungsweise ausgebildet, einen Fluss von Druckluft aus dem Luft-Druckspeicher heraus durch die Speicherausleitung hindurch in die Baustoffeinheit hinein freizugeben oder abzusperren. Dies kann bei Absperrung ermöglichen, einen Fluss von Druckluft auf die Speichereinleitung und/oder die Umgehungleitung zu steuern oder zu beschränken. Insbesondere kann dies bei Absperrung des Speicherfreigabe- und Absperrventils und bei Absperrung des Umgehungsfreigabe- und Absperrventils, soweit vorhanden, ermöglichen, den Luft-Druckspeicher mit Druckluft von der Luftkompressoreinheit zu befüllen, ohne dass Druckluft aus dem Luft-Druckspeicher durch die Speicherausleitung hindurch heraus fließen kann. Die Steuereinheit, soweit vorhanden, kann dazu ausgebildet sein, das Speicherfreigabe- und Absperrventil zum Freigeben oder Absperren, insbesondere automatisch, anzusteuern. Das Speicherfreigabe- und Absperrventil braucht nicht für Baustoff geeignet zu sein.

In einer Weiterbildung der Erfindung weist die Drucklufteinheit ein Speicherrückschlagventil auf. Das Speicherrückschlagventil ist an der Speichereinleitung dazu angeordnet beziehungsweise ausgebildet, einen Fluss von Druckluft aus dem Luft-Druckspeicher heraus durch die Speichereinleitung hindurch in die Luftkompressoreinheit hinein, insbesondere bis zur Luftkompressoreinheit hin, und/oder in die Umgehungsleitung hinein, insbesondere bis zur Umgehungsleitung hin, zu sperren. Dies ermöglicht zu verhindern, dass Druckluft aus dem, insbesondere befüllten, Luft-Druckspeicher durch die Speichereinleitung hindurch heraus fließen kann. Das Speicherrückschlagventil braucht nicht für Baustoff geeignet zu sein.

In einer Weiterbildung der Erfindung weist der Baustoff-Druckluftförderer mindestens ein Rückschlagventil auf. Das Rückschlagventil ist an der Baustoffeinheit dazu angeordnet beziehungsweise ausgebildet, einen Fluss von Baustoff aus der Baustoffeinheit heraus in die Drucklufteinheit hinein, insbesondere bis zur Drucklufteinheit hin, zu sperren. Dies ermöglicht die Drucklufteinheit vor Beschädigung durch Baustoff zu schützen. Das Rückschlagventil kann als Baustoffrückschlagventil bezeichnet werden.

In einer Weiterbildung der Erfindung weist der Baustoff-Druckluftförderer eine Druckluft-Förderleitung auf. Die Druckluft-Förderleitung ist für einen Fluss von Druckluft, insbesondere aus der Drucklufteinheit heraus, in die Baustoffeinheit hinein zur Förderung eines Flusses von Baustoff aus der Baustoffeinheit mittels Druckluft heraus geeignet beziehungsweise ausgebildet. Die Speicherausleitung und die Umgehungsleitung münden, insbesondere innerhalb der Drucklufteinheit, in die Druckluft-Förderleitung ein. Dies ermöglicht, dass die Drucklufteinheit mit der Baustoffeinheit durch nur eine einzige Leitung für Druckluft, die Druckluft-Förderleitung, flusstechnisch verbunden sein kann. In anderen Worten: die Speicherausleitung und die Umgehungsleitung beziehungsweise jeweilige Leitungsenden von diesen können mit der Baustoffeinheit durch die Druckluft-Förderleitung flusstechnisch verbunden sein, insbesondere für einen Fluss von Druckluft in die Baustoffeinheit hinein. Die Druckluft-Förderleitung braucht nicht für Baustoff geeignet zu sein.

### KURZBESCHREIBUNG DER ZEICHNUNGEN

Weitere Vorteile der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigt:

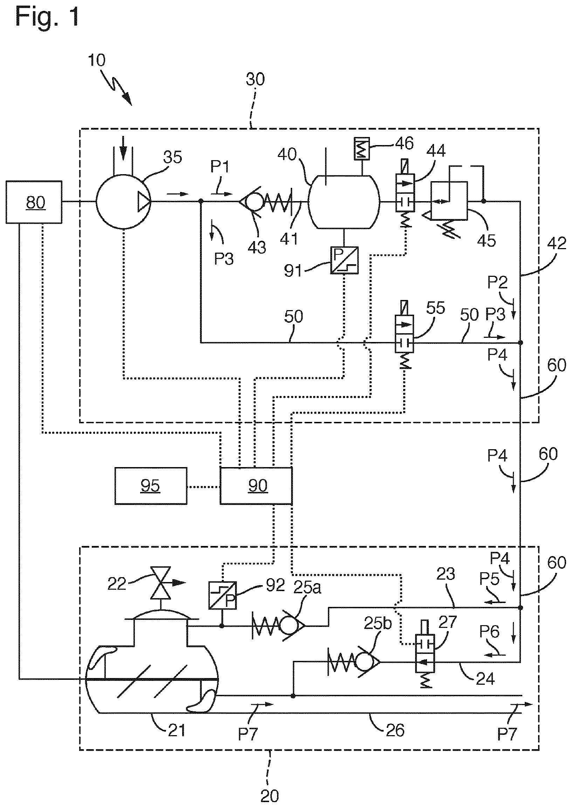

- Fig. 1: einen Schaltplan eines erfindungsgemäßen Baustoff-Druckluftförderers.

### DETAILLIERTE BESCHREIBUNG DER AUSFÜHRUNGSBEISPIELE

Der erfindungsgemäße Baustoff-Druckluftförderer 10 weist eine Baustoffeinheit 20 zur Bereitstellung von Baustoff und eine Drucklufteinheit 30 auf, wie in Fig. 1 jeweils durch gestrichelte Linien angedeutet. Die Drucklufteinheit 30 weist eine, insbesondere elektrisch steuerbare, Luftkompressoreinheit 35, einen Luft-Druckspeicher 40, eine Speichereinleitung 41, eine Speicherausleitung 42 und eine Umgehungsleitung 50 auf. Die Luftkompressoreinheit 35 ist zur Erzeugung von Druckluft ausgebildet. Der Luft-Druckspeicher 40 ist zur Speicherung von Druckluft ausgebildet. Die Speichereinleitung 41 ist für einen Fluss von Druckluft von der Luftkompressoreinheit 35 in den Luft-Druckspeicher 40 hinein ausgebildet, wie in Fig. 1 durch einen Pfeil P1 angedeutet. Die Speicherausleitung 42 ist für einen Fluss von Druckluft aus dem Luft-Druckspeicher 40 heraus in die Baustoffeinheit 20 hinein zur Förderung eines Flusses von Baustoff aus der Baustoffeinheit 20 mittels Druckluft heraus ausgebildet, wie in Fig. 1 durch einen Pfeil P2 angedeutet. Die Umgehungsleitung 50 ist für einen Fluss von Druckluft von der Luftkompressoreinheit 35 um den Luft-Druckspeicher 40 herum in die Baustoffeinheit 20 hinein zur Förderung eines Flusses von Baustoff aus der Baustoffeinheit 20 mittels Druckluft heraus ausgebildet, wie in Fig. 1 durch Pfeile P3 angedeutet.

Im Detail ist die Baustoffeinheit 20 zur Bereitstellung von Dickstoff ausgebildet, insbesondere Mörtel. Die Baustoffeinheit 20 weist einen Förderbehälter 21 auf, welcher zur Bereitstellung von Baustoff in einem förderfähigen Zustand ausgebildet ist. Zusätzlich ist im gezeigten Ausführungsbeispiel der Förderbehälter 21 als Mischbeschälter ausgebildet, welcher zum Mischen von Baustoff ausgebildet ist. In alternativen Ausführungsbeispielen braucht der Förderbehälter nicht als Mischbehälter ausgebildet zu sein.

Des Weiteren weist die Baustoffeinheit 20 einen Entlüftungshahn 22 auf, welcher an dem Förderbehälter 21 zum Entlüften des Förderbehälters 21 angeordnet ist, insbesondere bei einem Auffüllen des Förderbehälters 21 mit Baustoff. Im Detail weist die Baustoffeinheit 20 beziehungsweise ihr Förderbehälter 21 eine nicht dargestellte Einfüllöffnung auf, über welche der Förderbehälter 21, insbesondere diskontinuierlich, mit Baustoff aufgefüllt werden kann. Nach einem Auffüllen kann die Einfüllöffnung verschlossen werden und der Förderbehälter 21 kann mit Druckluft befüllt beziehungsweise beaufschlagt werden.

Die Luftkompressoreinheit 35 weist einen gemeinsamen Kompressor in Form eines Schraubenverdichters für die Speichereinleitung 41 und für die Umgehungsleitung 50 auf.

Im gezeigten Ausführungsbeispiel weist der Luft-Druckspeicher 40 ein Speichervolumen von 400 I auf. In alternativen Ausführungsbeispielen kann der Luft-Druckspeicher ein Speichervolumen von mindestens 100 I aufweisen.

Außerdem ist im gezeigten Ausführungsbeispiel der Luft-Druckspeicher 40 zur Speicherung von Druckluft mit einem maximalen Betriebsdruck von 12 bar ausgebildet. In alternativen Ausführungsbeispielen kann der Luft-Druckspeicher zur Speicherung von Druckluft mit einem maximalen Betriebsdruck von mehr als 8 bar ausgebildet sein. Zusätzlich weist im gezeigten Ausführungsbeispiel die Drucklufteinheit 30 ein Sicherheitsventil 46 auf, welches an dem Luft-Druckspeicher 40 dazu angeordnet ist, den maximalen Betriebsdruck des Luft-Druckspeichers 40 auf 12 bar zu begrenzen.

Weiter weist die Drucklufteinheit 30 einen Druckminderer 45 auf. Der Druckminderer 45 ist an der Speicherausleitung 42 dazu angeordnet, Druckluft aus dem Luft-Druckspeicher 40 heraus in die Baustoffeinheit 20 hinein auf einen maximalen Betriebsdruck von maximal 8 bar zu begrenzen.

Zudem weist die Drucklufteinheit 30 ein, insbesondere elektrisch steuerbares, Umgehungsfreigabe- und Absperrventil 55 in Form eines 2/2 Wegeventils auf. Das Umgehungsfreigabe- und Absperrventil 55 ist an der Umgehungsleitung 50 dazu angeordnet, einen Fluss von Druckluft von der Luftkompressoreinheit 35 durch die Umgehungsleitung 50 hindurch in die Baustoffeinheit 20 hinein freizugeben oder abzusperren.

Des Weiteren weist die Drucklufteinheit 30 ein, insbesondere elektrisch steuerbares, Speicherfreigabe- und Absperrventil 44 in Form eines 2/2 Wegeventils auf. Das Speicherfreigabe- und Absperrventil 44 ist an der Speicherausleitung 42, insbesondere zwischen dem Luft-Druckspeicher 40 und dem Druckminderer 45, dazu angeordnet, einen Fluss von Druckluft aus dem Luft-Druckspeicher 40 heraus durch die Speicherausleitung 42 hindurch in die Baustoffeinheit 20 hinein freizugeben oder abzusperren.

Außerdem weist die Drucklufteinheit 30 ein Speicherrückschlagventil 43 in Form eines Rückschlagklappenventils auf. Das Speicherrückschlagventil 43 ist an der Speichereinleitung 41 dazu angeordnet, einen Fluss von Druckluft aus dem Luft-Druckspeicher 40 heraus durch die Speichereinleitung 41 hindurch in die Luftkompressoreinheit 35 hinein oder in die Umgehungsleitung 50 hinein zu sperren.

Weiter weist der Baustoff-Druckluftförderer 10 eine Druckluft-Förderleitung 60 auf. Die Druckluft-Förderleitung 60 ist für einen Fluss von Druckluft, insbesondere aus der Drucklufteinheit 30 heraus, in die Baustoffeinheit 20 hinein zur Förderung eines Flusses von Baustoff aus der Baustoffeinheit 20 mittels Druckluft heraus ausgebildet, wie in Fig. 1 durch Pfeile P4 angedeutet. Die Speicherausleitung 42 und die Umgehungsleitung 50 münden, insbesondere innerhalb der Drucklufteinheit 30, in die Druckluft-Förderleitung 60 ein.

Zudem weist der Baustoff-Druckluftförderer 10 mindestens ein Rückschlagventil 25a, 25b in Form eines Rückschlagklappenventils auf. Das mindestens eine Rückschlagventil 25a, 25b ist an der Baustoffeinheit 20 dazu angeordnet, einen Fluss von Baustoff aus der Baustoffeinheit 20 heraus in die Drucklufteinheit 30 hinein, insbesondere in die Druckluft-Förderleitung 60 hinein, zu sperren.

Im Detail weist die Baustoffeinheit 20 eine Oberluftleitung oder Behältereinleitung 23 für einen Fluss von Druckluft aus der Druckluft-Förderleitung 60 heraus in den Förderbehälter 21 hinein zur Förderung eines Flusses von Baustoff aus dem Förderbehälter 21 mittels Druckluft heraus auf, wie in Fig. 1 durch einen Pfeil P5 angedeutet.

Des Weiteren weist die Baustoffeinheit 20 eine Baustoff-Förderleitung 26 für einen Fluss von Baustoff aus dem Förderbehälter 21 mittels Druckluft heraus auf, wie in Fig. 1 durch Pfeile P7 angedeutet.

Außerdem weist die Baustoffeinheit 20 eine Unterluftleitung oder Baustoffförderleitungeinleitung 24 für einen Fluss von Druckluft aus der Druckluft-Förderleitung 60 heraus in die Baustoff-Förderleitung 26 hinein zur Förderung eines Flusses von Baustoff durch die Baustoff-Förderleitung 26 mittels Druckluft hindurch auf, wie in Fig. 1 durch einen Pfeil P6 angedeutet.

Die Druckluft-Förderleitung des gezeigten Ausführungsbeispiels kann als Druckluft-Förderverteilleitung bezeichnet werden.

Weiter weist die Baustoffeinheit 20 ein, insbesondere elektrisch steuerbares, Unterfreigabe- und Absperrventil 27 in Form eines 2/2 Wegeventils auf. Das Unterfreigabe- und Absperrventil 27 ist an der Unterluftleitung 24 dazu angeordnet, einen Fluss von Druckluft aus der Druckluft-Förderleitung 60 heraus durch die Unterluftleitung 24 hindurch in die Baustoff-Förderleitung 26 hinein freizugeben oder abzusperren.

Im gezeigten Ausführungsbeispiel weist der Baustoff-Druckluftförderer 10 zwei Rückschlagventile 25a, 25b auf. Eines der Rückschlagventile 25a ist an der Oberluftleitung 23 dazu angeordnet, einen Fluss von Baustoff aus dem Förderbehälter 21 heraus durch die Oberluftleitung 23 hindurch in die Druckluft-Förderleitung 60 hinein zu sperren. Das andere der Rückschlagventile 25b ist an der Unterluftleitung 24, insbesondere zwischen der Baustoff-Förderleitung 26 und dem Unterfreigabe- und Absperrventil 27, dazu angeordnet, einen Fluss von Baustoff aus der Baustoff-Förderleitung 26 heraus durch die Unterluftleitung 24 hindurch in die Druckluft-Förderleitung 60 hinein zu sperren.

Zudem weist der Baustoff-Druckluftförderer 10 einen, insbesondere elektrisch steuerbaren, Elektromotor 80 zum Antrieb der Luftkompressoreinheit 35 auf. Im Detail ist der Elektromotor 80 zum Anschluss an einen Kraftstromanschluss mit 400 V und einer maximalen Strombelastung begrenzt auf maximal 32 A ausgebildet. Zusätzlich ist im gezeigten Ausführungsbeispiel der Elektromotor 80 zum Antrieb der Baustoffeinheit 20 beziehungsweise ihres Förderbehälters 21 ausgebildet. In alternativen Ausführungsbeispielen braucht der Elektromotor nicht zum Antrieb der Baustoffeinheit ausgebildet oder vorgesehen zu sein.

Des Weiteren weist der Baustoff-Druckluftförderer 10 eine, insbesondere elektrische, Steuereinheit 90 auf. Die Steuereinheit 90 ist dazu ausgebildet, den Baustoff-Druckluftförderer 10 derart anzusteuern, dass vor einer Förderung eines Flusses von Baustoff aus der Baustoffeinheit 20 mittels Druckluft heraus die Luftkompressoreinheit 35 den Luft-Druckspeicher 40 mit Druckluft befüllt. Des Weiteren ist die Steuereinheit 90 dazu ausgebildet, den Baustoff-Druckluftförderer 10 derart anzusteuern, dass für die Förderung eines Flusses von Baustoff aus der Baustoffeinheit 20 mittels Druckluft heraus mindestens zu Beginn Druckluft aus dem Luft-Druckspeicher 40 heraus und Druckluft von der Luftkompressoreinheit 35 durch die Umgehungsleitung 50 hindurch in die Baustoffeinheit 20 hinein fließt.

Außerdem weist im gezeigten Ausführungsbeispiel der Baustoff-Druckluftförderer 10 einen, insbesondere elektrisch auslesbaren, Druckaufnehmer oder Drucksensor 91 auf, welcher an dem Luft-Druckspeicher 40 dazu angeordnet ist, einen Ist-Druck von Druckluft innerhalb des Luft-Druckspeichers 40 zu messen.

Weiter weist im gezeigten Ausführungsbeispiel der Baustoff-Druckluftförderer 10 einen, insbesondere elektrisch auslesbaren, Druckaufnehmer oder Drucksensor 92 auf, welcher an dem Förderbehälter 21 dazu angeordnet ist, einen Ist-Druck von Druckluft innerhalb des Förderbehälters 21 zu messen.

Zudem weist im gezeigten Ausführungsbeispiel der Baustoff-Druckluftförderer 10 ein benutzerbetätigbares Bedienfeld 95 zur Bedienung des Baustoff-Druckluftförderers 10 auf.

Im gezeigten Ausführungsbeispiel ist die Steuereinheit 90 mit der Luftkompressoreinheit 35, dem Umgehungsfreigabe- und Absperrventil 55, dem Speicherfreigabe- und Absperrventil 44, dem Unterfreigabe- und Absperrventil 27, dem Elektromotor 80, dem Druckaufnehmer 91, dem Druckaufnehmer 92 und dem Bedienfeld 95 jeweils, insbesondere elektrisch, gekoppelt, wie in Fig. 1 durch gepunktete Linien angedeutet. Im Detail ist die Steuereinheit 90 dazu ausgebildet, die Luftkompressoreinheit 35, das Umgehungsfreigabe- und Absperrventil 55, das Speicherfreigabe- und Absperrventil 44, das Unterfreigabe- und Absperrventil 27 und den Elektromotor 80 anzusteuern.

Vor einer Förderung eines Flusses von Baustoff aus der Baustoffeinheit 20 mittels Druckluft heraus, steuert die Steuereinheit 90 das Umgehungsfreigabe- und Absperrventil 55 und das Speicherfreigabe- und Absperrventil 44 jeweils auf Absperrung an. Des Weiteren steuert die Steuereinheit 90 den Elektromotor 80 und die Luftkompressoreinheit 35 jeweils derart an, dass die Luftkompressoreinheit 35 den Luft-Druckspeicher 40 mit Druckluft auf 12 bar befüllt, und insbesondere nicht unnötigerweise weiter. Dies ist der Steuereinheit 90 durch den Druckaufnehmer 91 ermöglicht.

Typischerweise ist ein Ist-Druck innerhalb des Förderbehälters 21 vor der Förderung 0 bar, insbesondere nach einem Auffüllen des Förderbehälters 21 mit Baustoff. Die Steuereinheit 90 kennt den Ist-Druck durch den Druckaufnehmer 92. Somit kann die Steuereinheit 90 die Situation erkennen, nämlich 12 bar im Luft-Druckspeicher 40 und 0 bar im Förderbehälter 21. Entsprechend kann die Steuereinheit 90 für die Förderung ansteuern.

Im Detail steuert die Steuereinheit 90 für die Förderung eines Flusses von Baustoff aus der Baustoffeinheit 20 mittels Druckluft heraus mindestens zu Beginn das Umgehungsfreigabe- und Absperrventil 55 und das das Speicherfreigabe- und Absperrventil 44 jeweils auf Freigabe an. Des Weiteren steuert die Steuereinheit 90 mindestens zu Beginn den Elektromotor 80 und die Luftkompressoreinheit 35 jeweils derart an, dass die Luftkompressoreinheit 35 Druckluft erzeugt.

Wie die gezeigten und oben erläuterten Ausführungsbeispiele deutlich machen, stellt die Erfindung einen vorteilhaften Baustoff-Druckluftförderer bereit, welcher schnell Baustoff fördert und/oder einen niedrigen Energieverbrauch hat. - - - - - - - - - - - - - - -

## Patentansprüche

1. Baustoff-Druckluftförderer (10), aufweisend:
- eine Baustoffeinheit (20) zur Bereitstellung von Baustoff,
- eine Drucklufteinheit (30) aufweisend:
- eine Luftkompressoreinheit (35) zur Erzeugung von Druckluft,
- einen Luft-Druckspeicher (40) zur Speicherung von Druckluft,
- eine Speichereinleitung (41) für einen Fluss von Druckluft von der Luftkompressoreinheit (35) in den Luft-Druckspeicher (40) hinein,
- eine Speicherausleitung (42) für einen Fluss von Druckluft aus dem Luft-Druckspeicher (40) heraus in die Baustoffeinheit (20) hinein zur Förderung eines Flusses von Baustoff aus der Baustoffeinheit (20) mittels Druckluft heraus,
- eine Umgehungsleitung (50) für einen Fluss von Druckluft von der Luftkompressoreinheit (35) um den Luft-Druckspeicher (40) herum in die Baustoffeinheit (20) hinein zur Förderung eines Flusses von Baustoff aus der Baustoffeinheit (20) mittels Druckluft heraus, und
- eine Steuereinheit (90), welche dazu ausgebildet ist, den Baustoff-Druckluftförderer (10) derart anzusteuern,
- dass vor einer Förderung eines Flusses von Baustoff aus der Baustoffeinheit (20) mittels Druckluft heraus die Luftkompressoreinheit (35) den Luft-Druckspeicher (40) mit Druckluft befüllt, **dadurch gekennzeichnet, dass** die Baustoffeinheit (20) zur Bereitstellung von Dickstoff ausgebildet ist, und dass die Steuereinheit (90) dazu ausgebildet ist, den Baustoff-Druckluftförderer (10) derart anzusteuern, dass für die Förderung eines Flusses von Baustoff aus der Baustoffeinheit (20) mittels Druckluft heraus mindestens zu Beginn Druckluft aus dem Luft-Druckspeicher (40) heraus und Druckluft von der Luftkompressoreinheit (35) durch die Umgehungsleitung (50) hindurch in die Baustoffeinheit (20) hinein fließt.

2. Baustoff-Druckluftförderer (10) nach Anspruch 1,
- wobei der Luft-Druckspeicher (40) zur Speicherung von Druckluft mit einem maximalen Betriebsdruck von mehr als 8 bar ausgebildet ist.

3. Baustoff-Druckluftförderer (10) nach einem der vorhergehenden Ansprüche, aufweisend:
- einen Elektromotor (80) zum Antrieb der Luftkompressoreinheit (35).

4. Baustoff-Druckluftförderer (10) nach einem der vorhergehenden Ansprüche,
- die Drucklufteinheit (30) aufweisend einen Druckminderer (45), welcher an der Speicherausleitung (42) dazu angeordnet ist, Druckluft aus dem Luft-Druckspeicher (40) heraus in die Baustoffeinheit (20) hinein auf einen maximalen Betriebsdruck von maximal 8 bar zu begrenzen.

5. Baustoff-Druckluftförderer (10) nach einem der vorhergehenden Ansprüche,
- die Drucklufteinheit (30) aufweisend ein Umgehungsfreigabe- und Absperrventil (55), welches an der Umgehungsleitung (50) dazu angeordnet ist, einen Fluss von Druckluft von der Luftkompressoreinheit (35) durch die Umgehungsleitung (50) hindurch in die Baustoffeinheit (20) hinein freizugeben oder abzusperren.

6. Baustoff-Druckluftförderer (10) nach einem der vorhergehenden Ansprüche,
- die Drucklufteinheit (30) aufweisend ein Speicherfreigabe- und Absperrventil (44), welches an der Speicherausleitung (42) dazu angeordnet ist, einen Fluss von Druckluft aus dem Luft-Druckspeicher (40) heraus durch die Speicherausleitung (42) hindurch in die Baustoffeinheit (20) hinein freizugeben oder abzusperren.

7. Baustoff-Druckluftförderer (10) nach einem der vorhergehenden Ansprüche,
- die Drucklufteinheit (30) aufweisend ein Speicherrückschlagventil (43), welches an der Speichereinleitung (41) dazu angeordnet ist, einen Fluss von Druckluft aus dem Luft-Druckspeicher (40) heraus durch die Speichereinleitung (41) hindurch in die Luftkompressoreinheit (35) hinein und/oder in die Umgehungsleitung (50) hinein zu sperren.

8. Baustoff-Druckluftförderer (10) nach einem der vorhergehenden Ansprüche, aufweisend:
- mindestens ein Rückschlagventil (25a, 25b), welches an der Baustoffeinheit (20) dazu angeordnet ist, einen Fluss von Baustoff aus der Baustoffeinheit (20) heraus in die Drucklufteinheit (30) hinein zu sperren.

9. Baustoff-Druckluftförderer (10) nach einem der vorhergehenden Ansprüche, aufweisend:
- eine Druckluft-Förderleitung (60) für einen Fluss von Druckluft in die Baustoffeinheit (20) hinein zur Förderung eines Flusses von Baustoff aus der Baustoffeinheit (20) mittels Druckluft heraus,
- wobei die Speicherausleitung (42) und die Umgehungsleitung (50) in die Druckluft-Förderleitung (60) einmünden.

## Claims

1. Building material compressed-air conveyor (10), comprising:
- a building material unit (20) for providing building material,
- a compressed-air unit (30) comprising:
- an air compressor unit (35) for generating compressed air,
- an air pressure store (40) for storing compressed air,
- a store inlet line (41) for a flow of compressed air from the air compressor unit (35) into the air pressure store (40),
- a store outlet line (42) for a flow of compressed air out of the air pressure store (40) into the building material unit (20) for conveying a flow of building material out of the building material unit (20) by means of compressed air,
- a bypass line (50) for a flow of compressed air from the air compressor unit (35) around the air pressure store (40) into the building material unit (20) for conveying a flow of building material out of the building material unit (20) by means of compressed air, and
- a control unit (90), which is designed to control the building material compressed-air conveyor (10) in such a way
- that before a flow of building material is conveyed out of the building material unit (20) by means of compressed air, the air compressor unit (35) fills the air pressure store (40) with compressed air, **characterized in that** the building material unit (20) is designed to provide thick material, and **in that** the control unit (90) is designed to control the building material compressed-air conveyor (10) in such a way
that, for conveying a flow of building material out of the building material unit (20) by means of compressed air, at least at the start compressed air flows out of the air pressure store (40) and compressed air flows from the air compressor unit (35) through the bypass line (50) into the building material unit (20).

2. Building material compressed-air conveyor (10) according to Claim 1,
- wherein the air pressure store (40) is designed to store compressed air at a maximum operating pressure of more than 8 bar.

3. Building material compressed-air conveyor (10) according to either of the preceding claims, comprising:
- an electric motor (80) for driving the air compressor unit (35).

4. Building material compressed-air conveyor (10) according to one of the preceding claims,
- the compressed-air unit (30) comprising a pressure reducer (45), which is arranged on the store outlet line (42) to limit compressed air flowing out of the air pressure store (40) into the building material unit (20) to a maximum operating pressure of at most 8 bar.

5. Building material compressed-air conveyor (10) according to one of the preceding claims,
- the compressed-air unit (30) comprising a bypass release and shut-off valve (55), which is arranged on the bypass line (50) to allow or shut off a flow of compressed air from the air compressor unit (35) through the bypass line (50) into the building material unit (20).

6. Building material compressed-air conveyor (10) according to one of the preceding claims,
- the compressed-air unit (30) comprising a store release and shut-off valve (44), which is arranged on the store outlet line (42) to allow or shut off a flow of compressed air out of the air pressure store (40) through the store outlet line (42) into the building material unit (20).

7. Building material compressed-air conveyor (10) according to one of the preceding claims,
- the compressed-air unit (30) comprising a store check valve (43), which is arranged on the store inlet line (41) to block a flow of compressed air out of the air pressure store (40) through the store inlet line (41) into the air compressor unit (35) and/or into the bypass line (50).

8. Building material compressed-air conveyor (10) according to one of the preceding claims, comprising:
- at least one check valve (25a, 25b), which is arranged on the building material unit (20) to block a flow of building material out of the building material unit (20) into the compressed-air unit (30).

9. Building material compressed-air conveyor (10) according to one of the preceding claims, comprising:
- a compressed-air conveying line (60) for a flow of compressed air into the building material unit (20) for conveying a flow of building material out of the building material unit (20) by means of compressed air,
- wherein the store outlet line (42) and the bypass line (50) open into the compressed-air conveying line (60).

## Revendications

1. Transporteur à air comprimé pour matériau de construction (10), présentant :
- une unité de matériau de construction (20) pour fournir du matériau de construction,
- présentant une unité d'air comprimé (30) :
- une unité de compresseur d'air (35) pour produire de l'air comprimé,
- un réservoir d'air sous pression (40) pour stocker l'air comprimé,
- une entrée de réservoir (41) pour un flux d'air comprimé depuis l'unité de compresseur d'air (35) dans le réservoir d'air sous pression (40),
- une sortie de réservoir (42) pour un flux d'air comprimé hors du réservoir d'air sous pression (40) dans l'unité de matériau de construction (20) pour transporter un flux de matériau de construction hors de l'unité de matériau de construction (20) au moyen d'air comprimé,
- une conduite de dérivation (50) pour un flux d'air comprimé depuis l'unité de compresseur d'air (35) en contournant le réservoir d'air sous pression (40) dans l'unité de matériau de construction (20) pour transporter un flux de matériau de construction hors de l'unité de matériau de construction (20) au moyen d'air comprimé, et
- une unité de commande (90) qui est configurée pour commander le transporteur à air comprimé pour matériau de construction (10) de telle sorte
- qu'avant un transport d'un flux de matériau de construction hors de l'unité de matériau de construction (20) au moyen d'air comprimé, l'unité de compresseur d'air (35) remplit le réservoir d'air sous pression (40) d'air comprimé, **caractérisé en ce que** l'unité de matériau de construction (20) est configurée pour fournir du matériau épais, et **en ce que** l'unité de commande (90) est configurée pour commander le transporteur à air comprimé pour matériau de construction (10) de telle sorte que, pour le transport d'un flux de matériau de construction hors de l'unité de matériau de construction (20) au moyen d'air comprimé, de l'air comprimé s'écoule au moins au début hors du réservoir d'air sous pression (40) et de l'air comprimé s'écoule depuis l'unité de compresseur d'air (35) à travers la conduite de dérivation (50) dans l'unité de matériau de construction (20) .

2. Transporteur à air comprimé pour matériau de construction (10) selon la revendication 1,
- le réservoir d'air sous pression (40) étant configuré pour stocker de l'air comprimé ayant une pression de service maximale supérieure à 8 bars.

3. Transporteur à air comprimé pour matériau de construction (10) selon l'une quelconque des revendications précédentes, présentant :
- un moteur électrique (80) pour entraîner l'unité de compresseur d'air (35).

4. Transporteur à air comprimé pour matériau de construction (10) selon l'une quelconque des revendications précédentes,
- l'unité d'air comprimé (30) présentant un réducteur de pression (45) qui est agencé au niveau de la sortie de réservoir (42) pour limiter l'air comprimé provenant du réservoir d'air sous pression (40) dans l'unité de matériau de construction (20) à une pression de service maximale de 8 bars maximum.

5. Transporteur à air comprimé pour matériau de construction (10) selon l'une quelconque des revendications précédentes,
- l'unité d'air comprimé (30) présentant une soupape de libération et de blocage de dérivation (55) agencée au niveau de la conduite de dérivation (50) pour libérer ou bloquer un flux d'air comprimé depuis l'unité de compresseur d'air (35) à travers la conduite de dérivation (50) dans l'unité de matériau de construction (20) .

6. Transporteur à air comprimé pour matériau de construction (10) selon l'une quelconque des revendications précédentes,
- l'unité d'air comprimé (30) présentant une soupape de libération et de blocage de réservoir (44) agencée au niveau de la sortie de réservoir (42) pour libérer ou bloquer un flux d'air comprimé depuis le réservoir d'air sous pression (40) à travers la sortie de réservoir (42) dans l'unité de matériau de construction (20).

7. Transporteur à air comprimé pour matériau de construction (10) selon l'une quelconque des revendications précédentes,
- l'unité d'air comprimé (30) présentant un clapet anti-retour de réservoir (43) agencé au niveau de l'entrée de réservoir (41) pour bloquer un flux d'air comprimé depuis le réservoir d'air sous pression (40) à travers l'entrée de réservoir (41) dans l'unité de compresseur d'air (35) et/ou dans la conduite de dérivation (50).

8. Transporteur à air comprimé pour matériau de construction (10) selon l'une quelconque des revendications précédentes, présentant :
- au moins un clapet anti-retour (25a, 25b) agencé au niveau de l'unité de matériau de construction (20) pour bloquer un flux de matériau de construction depuis l'unité de matériau de construction (20) dans l'unité d'air comprimé (30).

9. Transporteur à air comprimé pour matériau de construction (10) selon l'une quelconque des revendications précédentes, présentant :
- une conduite de transport d'air comprimé (60) pour un flux d'air comprimé entrant dans l'unité de matériau de construction (20) pour transporter un flux de matériau de construction hors de l'unité de matériau de construction (20) au moyen d'air comprimé,
- la sortie de réservoir (42) et la conduite de dérivation (50) débouchant dans la conduite de transport d'air comprimé (60).
